# EUROPÄISCHE PATENTSCHRIFT

(11) **EP 4 100 224 B1**
(45) Veröffentlichungstag und Bekanntmachung des Hinweises auf die Patenterteilung: **24.04.2024**
(21) Anmeldenummer: 21702364.7
(22) Anmeldetag: 26.01.2021
(51) Int. Cl.: B29C 45/14, B29C 43/18, B29C 43/36, B29C 43/40

(54) **SPRITZGUSSWERKZEUG UND VERFAHREN ZUR HERSTELLUNG VON FORMTEILEN**
INJECTION MOLDING TOOL AND METHOD FOR PRODUCING MOLDED PARTS
OUTIL DE MOULAGE PAR INJECTION ET MÉTHODE DE PRODUCTION DE PIÈCES MOULÉES

(30) Priorität: 03.02.2020 CH 1192020
(43) Veröffentlichungstag der Anmeldung: 14.12.2022
(73) Patentinhaber: Georg Kaufmann Formenbau AG, 5453 Busslingen (CH)
(72) Erfinder: LEBER, Richard, 79809 Weilheim -Nöggenschwiel (DE); HAGENBUCH, Alex, 8965 Berikon (CH); SCHÖNAUER, Martin, 5608 Stetten (CH); HÜRLIMANN, Roman, 5621 Zufikon (CH)
(74) Vertreter: Laminger, Norbert
(86) Internationale Anmeldenummer: PCT/EP2021/025029
(87) Internationale Veröffentlichungsnummer: WO 2021/156001

(56) Entgegenhaltungen:
- EP-A1- 3 305 497
- JP-A- H08 156 015

## Beschreibung

Die Erfindung betrifft eine Vorrichtung zur Herstellung eines Verbundformteils gemäss dem Oberbegriff des Anspruchs 1, sowie ein Verfahren zu dessen Herstellung gemäss dem Oberbegriff des Anspruchs 10.

Bei der Herstellung von Formteilen aus Teilkomponenten mit unterschiedlichen physikalischen Eigenschaften können diese Komponenten während des Formungsverfahrens stoffschlüssig oder mindestens formschlüssig verbunden werden. Diese Vorgangsweise findet besonders dort Anwendung, wo zum Beispiel Materialien, welche technische Erfordernisse an Leichtigkeit und/oder Stabilität erfüllen müssen, zusätzlich mit einer ansprechenderen Optik und/oder Haptik versehen werden sollen.

Dazu werden typischerweise Folien, Dekore und/oder Textilien mit den gewünschten optischen und/oder haptischen Eigenschaften entweder vorgeformt oder in einem noch elastischen/flexiblen Zustand in eine Form gegeben und mit dem entsprechenden Trägermaterial hinterfüllt. Um sicherzustellen, dass die gesamte mit der Folie zu überziehende Fläche auch von dieser bedeckt wird, hat diese Folie in der Regel einen den Rand des Formteils überragenden Überhang, welcher in einem eigenen Verfahrensschritt abgetrennt werden muss. Dies kann entweder mit hohem Aufwand manuell durchgeführt werden, wo es zu Ausschussware kommen kann, wenn dabei die Struktur des Verbundformteils beschädigt wird. Entsprechende automatisierte Vorrichtungen zur Entfernung des überstehenden Randes sind hingegen teuer und aufwändig in der Wartung und im Unterhalt und erhöhen daher die Betriebskosten wesentlich.

Eine beispielhafte Variante sieht ein Formpressen vor, bei dem eine flexible Folie eingelegt und anschließend eine auf der Matrize befindliche Oberflächenstruktur auf die Folie aufgeprägt wird. Ein solches Verfahren ist zum Beispiel in der DE 199 160 23 A1 offenbart. Hier wird auch gleich versucht mittels Schneidflächen die Ausdehnungen der Folie an die gewünschte Form des Verbundformteils anzupassen. Ähnlich ist es bei der Spritzpräge-Vorrichtung und dem entsprechenden Verfahren gemäss der DE 10 2010 016350 A1. Auch hier wird im Zuge des Schliessens der Formwerkzeuge die hinterspritzte Folie abgeschert und derart die Folie am Übergang von der Vorderseite auf die Rückseite des Formteils abgetrennt.

Die Vorrichtung gemäss der DE 25 48 318 A1 weist einen von den Formwerkzeugen separaten Niederhalter für die zu beschichtende Folie auf, der auch den äusseren Umfang des Endproduktes beschichtete Folie bestimmt. Mittels einer Abquetschkante an diesem Niederhalter wird die Folie am Randbereich, d.h. ebenfalls wieder am Übergang zwischen der Seite der Folie und der Seite des aufgebrachten Materials abgetrennt. Solche Schnitte bzw. Abquetschränder oder Abscherränder sind allerdings an den Kanten des Verbundformteils unansehnlich und benötigen unter Umständen eine weitere Bearbeitung.

Eine Möglichkeit, wie bei Verbundformteilen eine ansehnliche Kante herstellbar ist, wird in der DE 34 343 66 A1 gezeigt. Die Folie weist am Rand des Formteils einen Umbug auf und wird entlang einer abgewinkelten Quetschkante geführt. Somit entsteht eine Sollbruchstelle, an welcher der Überschuss der Folie einfach abgerissen werden kann. Zwar wird dadurch das Herstellungsverfahren vereinfacht, es kann aber das manuell durchzuführende Abreißen zu einer Beschädigung des Verbundformteils und insbesondere der dekorativen Folie führen. Üblicherweise wird die flächenhafte Struktur, meist eine Dekorfolie, mit dem Material der Trägerstruktur hinterspritzt, dann teilweise im Werkzeug, teilweise auch nachträglich beschnitten und anschliessend in einer separaten Umbuganlage umgebugt.

Die Herstellung des Umbugs kann aber auch wie in der EP 2 554 352 B1 offenbart derart erfolgen, dass während des Schließens des Werkzeugs die überstehende Kante von dem Formkern in Richtung der Matrize umgebogen wird, so dass überstehende Dekorfolie direkt im Werkzeug umgebugt und befestigt wird. Damit ist es möglich, Umbüge beispielsweise in den Winkel von 90° und 180° direkt im Spritzgusswerkzeug durchzuführen und dennoch beim Hinterspritzen von Einlegern keine Nachbearbeitungsschritte an den resultierenden Bauteilen durchzuführen zu müssen.

Die JP H08 156015 A offenbart eine Vorrichtung und ein Verfahren zur Herstellung eines Formteils mit einem Trägermaterial und einem darauf aufgebrachten Dekormaterial. Die Vorrichtung umfasst eine Matrize und eine Patrize, wobei in der Matrize Vakuumkanäle vorhanden sind, um das Dekormaterial an die Matrize anzusaugen. Weiters sind in diesen formgebenden Teilen auch Zufuhrkanäle und -öffnungen für Kühlluft vorhanden sind, um den Formteil rasch abzukühlen.

Bekannt ist weiters aus der EP 3 305 497 A1 eine Vorrichtung zur Herstellung eines Verbundformteils, bestehend aus einer Trägerstruktur und eine flächenhaften Dekorstruktur mit einem Umbug. Diese umfasst mindestens zwei Formelemente, Matrize und Stempel, zur Aufnahme der Dekorstruktur, und sie können von einem offenen in einen geschlossenen Zustand überführt werden. Im geschlossenen Zustand definieren die Formelemente einen Hohlraum, welcher der Form des herzustellenden Verbundformteils entspricht. An einem der Formelemente ist eine Schneidkante ausgebildet, mit welcher bei Überführen vom geschlossenen in den offenen Zustand ein Überschuss des Verbundformteils und/oder der Dekorstruktur abtrennbar ist. Eine Umbugkante ist an einem zweiten Formelement so ausgestaltet, dass sie den Hohlraum teilweise zur Stirnseite begrenzt.

Diese Vorrichtung umfasst in bekannter Weise eine Matrize zur Aufnahme einer flächenhaften Struktur, vorzugsweise einer Dekorstruktur, in einem unverbundenen Zustand, einen Stempel und einen Matrizenschieber. Diese Formelemente sind derart relativ zueinander bewegbar angeordnet, dass sie in einem geschlossenen Zustand gemeinsam einen Hohlraum definieren, welcher im Wesentlichen der Form des herzustellenden Verbundformteils entspricht. Durch zumindest einen und/oder an mindestens einem Bereich eines der Bauteile Matrizenschieber, Stempel bzw. Matrize ist eine Umbug-Anordnung mit einem ersten, den Umbug definierenden gekrümmten Bereich und mit einem davon beabstandeten zweiten, den umgebugten Rand der Dekorstruktur fixierenden und/oder abquetschenden bzw. gänzlich durchtrennenden Bereich ausgebildet.

Damit können in einfacher Weise auch Umbuge von mehr als 90° hergestellt werden, wobei die flächenhafte Struktur, beispielsweise eine Dekorfolie, eine Textilie oder dergleichen, im Spritzgusswerkzeug gezielt in eine genau vordefinierte Umbuggeometrie gefaltet wird. Dies kann über den gesamten Rand des Bauteils vorgesehen sein, oder auch nur in bestimmten Abschnitten, wobei dann die Werkzeugelemente nur in diesen Bereichen wie beschrieben ausgeführt sind. Ränder im Sinn der Erfindung können auch entlang von Öffnungen im Innenbereich des Bauteils vorliegen, beispielsweise bei Verkleidungen von B-Säulen in Kraftfahrzeugen bei den Öffnungen für die Gurtenverstellschieber oder bei Seitenverkleidungen an den Öffnungen für Lautsprecher od. dgl.

Der Einleger wird also direkt im Werkzeug umgeformt und muss nicht bereits in einem separaten Arbeitsschritt vorab umgeformt werden. Nach dem Hinterspritzen und Entformen ist das Bauteil in hoher Qualität fertig umgebugt und beschnitten, wobei das Dekor fest mit der Kunststoffschmelze verflossen ist und ein nachträgliches Ablösen durch Umwelteinflüsse ausgeschlossen werden kann. Eine separate Umbuganlage und Beschneideanlage, alternativ der manuelle Beschnitt, können vermieden werden.

Es besteht somit ein Bedarf nach einer Vorrichtung und einem entsprechenden Verfahren, mit welchem man Verbundformteile mit flächenhaften Dekorstrukturen möglichst einfach und in einem Schritt entformen und dabei gleichzeitig vom Überschussmaterial der Dekorstruktur befreien kann.

Es ist eine Aufgabe der vorliegenden Erfindung die Nachteile der bekannten Vorrichtung sowie des bekannten Verfahrens zu beheben und insbesondere eine Vorrichtung und ein Verfahren bereit zu stellen, mit welchem sich ein Verbundformteil mit umgebugter flächenhafter Struktur effizient und mit hoher Qualität herstellen lässt.

Diese Aufgabe wird durch eine Vorrichtung und ein Verfahren gemäß den Ansprüchen gelöst.

Zur Lösung dieser Aufgabe ist die erfindungsgemässe Vorrichtung dadurch gekennzeichnet, dass der Stempel in seinem dem Matrizenschieber zugewandten Bereich ein in paralleler Richtung zum Schieber bewegliches Element zur Fixierung der flächenhaften Struktur aufweist. Damit kann der Randbereich der flächenhaften Struktur zwischen diesen beiden parallel bewegbaren Bauteilen, dem Matrizenschieber und einem parallel beweglichen Voreiler, fixiert und im Zuge des Schliessens des Formwerkzeuges gezielt in einem vordefinierten Mass umgebugt werden.

Bevorzugt weist dabei im zweiten Bereich mindestens einer der Bauteile Matrizenschieber, Stempel oder Matrize eine Schneide auf, welche im geschlossenen Zustand einen Abstand zwischen einem gegenüberliegenden Bauteil zu mindestens 80 % überbrückt. Anstelle einer durchgehenden Schneide könnten auch einzelne Stifte vorgesehen sein, um eine Perforierung des Materials der flächenhaften Struktur zu erzielen. Damit wird eine Schwächung des Materials der Dekorstruktur herbeigeführt, um diese einfach und mit geringem Aufwand abtrennen zu können. Vorzugsweise ist diese Schneide am Schieber ausgebildet. Die Schneide überbrückt, um eine möglichst einfache Ablösung des überstehenden Randstreifens der Dekorstruktur zu gestatten, bevorzugt mindestens 90 %, besonders bevorzugt mindestens 95 % bis nahezu zur Kontaktierung der gegenüberliegenden Fläche des gegenüberliegenden Bauteils.

Gemäss einer weiteren Ausführungsform ist die Erfindung dadurch gekennzeichnet, dass Matrize und Matrizenschieber im geschlossenen Zustand zusammen den ersten, den Umbug definierenden Bereich des Hohlraums bilden und auf einem dem Stempel zugewandten Rand des Matrizenschiebers die Schneide ausgebildet ist. Durch diese konstruktive Anordnung ist es möglich, gleichzeitig mit oder unmittelbar nach dem Schliessen des Formwerkzeuges auch gleich den überstehenden Rand der Dekorstruktur abzutrennen oder zumindest dafür vorzubereiten. Bevorzugt ist dazu die Schneide an einem abgesetzten Rand des Schiebers angeordnet.

Eine vorteilhafte Ausführungsform der Erfindung sieht vor, dass das in paralleler Richtung zum Matrizenschieber bewegliche Element ein Voreiler ist, wobei der Matrizenschieber und der Voreiler unabhängig voneinander bewegbar sind.

Eine weitere Ausführungsform einer Vorrichtung gemäss der Erfindung sieht vor, dass die Matrize zumindest eine aus dem Hohlraum herausführende Absaugöffnung aufweist, die an eine Vorrichtung zur Luftabsaugung anschliessbar ist. Die flächenhafte Struktur wird damit einerseits in den Umbugbereich gesaugt und legt sich zur Herstellung eines genau definierten Umbugs in dessen gekrümmten Abschnitt, und andererseits wird dadurch auch die Struktur in der Matrize fixiert.

Andererseits ist es gemäss der vorliegenden Erfindung auch möglich, dass der Stempel zumindest eine in den Hohlraum führende und an eine Druckluftquelle anschliessbare Druckluftzuführung aufweist. Diese konstruktive Ausführungsform drückt die flächenhafte Struktur an die Matrize an, insbesondere im Bereich des Randes mit dem Umbug, der damit auch sehr gezielt hergestellt werden kann.

Um die Wirkung sowohl des angelegten Vakuums als auch der eingeblasenen Druckluft noch besser zur Geltung zu bringen, kann gemäss einer bevorzugten Weiterbildung der oben genannten Vorrichtung an der Seitenwange des Stempels unmittelbar anschliessend an die Kontaktstelle mit dem Matrizenschieber an der Aussenseite des Hohlraums eine Dichtung angebracht sein.

Gemäss einer weiteren erfindungsgemässen Ausführungsform der Erfindung weist der Stempel in seinem dem Matrizenschieber zugewandten Bereich ein in paralleler Richtung zur Matrize bewegliches Element auf, welches eine in den Umbugbereich ragende Kante oder einen entsprechenden Rechen oder Kamm aufweist, welche allenfalls in Richtung des gekrümmten Bereiches ausfahrbar sind. Bei dieser Variante wird die Dekorfolie oder jede andere flächenhafte Struktur bei Schliessen des Formwerkzeuges mechanisch in den Umbugbereich hineingedrückt, um wie auch bei allen anderen Varianten die genau definierte Umbuggeometrie und Umbugbreite zu erhalten.

Unterstützend, oder bei geeigneter Eigenschaft der flächenhaften Dekorstruktur, kann ein Anlegen der Struktur an die Oberfläche der Matrize auch durch eine Heizanordnung für die flächenhafte Struktur erreicht werden, die zu einer Erweichung und Anlegen an die Kontur auch im Umbugbereich allein durch das Gewicht der Dekorfolie führt. Auch alle anderen Arten von definierter Herstellung des Umbugs durch aktives Fixieren und Mitführen des umgebugten Randbereiches beim Schliessen des Formwerkzeuges können durch Erweichen der erwärmten Dekorfolie unterstützt werden. Vorzugsweise ist dazu zumindest eine Heizanordnung vorgesehen, welche vorzugsweise extern oder an zumindest einem der Bauteile Matrize, Schieber bzw. Stempel angeordnet sein kann.

Alle der oben genannten Ausführungsformen der Vorrichtung können auch in beliebigen Kombinationen miteinander zum Einsatz kommen.

Ein Verfahren zur Herstellung eines Verbundformteils mit einer mindestens einen Teil der Oberfläche des Verbundformteils umspannenden flächenhaften Struktur, vorzugsweise Dekorstruktur, und einer zumindest teilweise gespritzten Trägerstruktur, umfasst die Schritte:
a) Bereitstellen einer Vorrichtung mit zumindest einem Stempel, einer Matrize und einem Schieber in einer Offenposition;
b1) Einlegen einer noch unverbundenen flächenhaften Struktur in die Vorrichtung, so dass die flächenhafte Struktur mindestens einem Teil einer Kontur des zu erzielenden Verbundformteils entspricht;
b2) optional unter Verwendung einer mit einem Umbug teilweise vorgeformten flächenhaften Struktur;
c1) Überführen der Vorrichtung in eine Geschlossen-Position und Herstellung eines die Form des herzustellenden Verbundformteils im Wesentlichen bestimmenden Hohlraums im Inneren der Vorrichtung;
d) Einführen einer ungehärteten Trägerstruktur in den Hohlraum;
e) Abtrennen eines über den Rand des Umbugs hinausragenden Streifens der flächenhaften Struktur auf der Rückseite des Verbundformteils;
f) Aushärten und anschließend
g) Entformen des Verbundformteils; wobei die Schritte d) bis f) in unterschiedlicher Reihenfolge und/oder zum Teil gleichzeitig durchgeführt werden können.

Zur Lösung der eingangs gestellten Aufgabe ist ein derartiges Verfahren erfindungsgemäss dadurch gekennzeichnet, dass während des Schrittes c1) des Überführens der Vorrichtung in eine Geschlossen-Position und während Herstellung des die Form des herzustellenden Verbundformteils im Wesentlichen bestimmenden Hohlraums im Inneren der Vorrichtung der äussere Rand des Umbugs zwischen zwei parallel bewegten Bauteilen fixiert und mit deren Schliessbewegung mitgeführt wird, und dass vor und/oder während des Einführens der ungehärteten Trägerstruktur in Schritt d) die flächenhafte Struktur im Bereich des äusseren Randes des Umbugs fixiert wird.

Damit ist die genau definierte, reproduzierbare und exakt um beliebige Winkel mögliche Herstellung von umgebugten Rändern der flächenhaften Strukturen von Verbundformteilen wesentlich erleichtert. Durch diese Fixierung können genau definierte Umbuge auch von mehr als 90° sicher und reproduzierbar erreicht werden, indem die Dekorfolie oder jede andere verwendete flächenhafte Struktur im Spritzgusswerkzeug gezielt in die Umbuggeometrie gefaltet wird. Nach dem Hinterspritzen und Entformen ist das Bauteil fertig umgebugt und beschnitten. Weitere Vorteile sind die Einsparung des Handlings zwischen Spritzgussmaschine und Umbuganlage und die damit einhergehende Verkürzung der Durchlaufzeit des Bauteiles. Aufgrund der Vermeidung von ein bis zwei Prozessschritten ist auch eine Reduzierung der Ausschussquote möglich, ebenso wie die Verbesserung der Umbugqualität, da das Dekor fest mit der Kunststoffschmelze verflossen ist und ein nachträgliches Ablösen durch Umwelteinflüsse ausgeschlossen werden kann.

Gemäss einer vorteilhaften Variante dieses Verfahrens wird vor oder während des Einführens der ungehärteten Trägerstruktur in Schritt d) und jedenfalls vor dem Abtrennen des über den äusseren Rand des Umbugs hinausragenden Streifens der flächenhaften Dekorstruktur (2) auf der Rückseite des Verbundformteils in Schritt e) die flächenhafte Dekorstruktur (2) vollständig umgebugt.

Eine Möglichkeit für die aktive Formgebung der Dekorfolie, textiler Bahnen oder anderer flächenhafter Strukturen ist es, dass die flächenhafte Struktur, insbesondere der Randbereich mit dem Umbug, durch Anlegen eines Vakuums an bzw. in die Matrize bzw. den gekrümmten Bereich zwischen Matrize und Matrizenschieber angesaugt wird.

Eine andere Variante sieht dagegen vor, dass die flächenhafte Struktur, insbesondere der Randbereich mit dem Umbug, durch Anlegen eines Überdrucks an bzw. in die Matrize bzw. den gekrümmten Bereich zwischen Matrize und Matrizenschieber angedrückt wird.

Um dabei die Wirkung des angelegten Vakuums bzw. der eingebrachten Druckluft noch besser zur Geltung zu bringen, wird bevorzugt der Abstand zwischen den Bauteilen zumindest während des Anlegens des Vakuums und/oder des Überdrucks abgedichtet.

Gemäss einer vorteilhaften weiteren Ausführungsform des erfindungsgemässen Verfahrens wird die flächenhafte Struktur mittels zumindest eines mechanischen Elementes in den gekrümmten Bereich von Matrize und/oder Matrizenschieber gedrückt.

Unterstützend oder alternativ zu den oben genannten Varianten der Verfahren kann die flächenhafte Struktur vor und/oder zumindest während des Umbugens erwärmt werden.

Alle genannten Verfahrensvarianten können auch in beliebigen Kombinationen eingesetzt werden.

Zum besseren Verständnis der Erfindung wird diese anhand der nachfolgenden Figuren näher erläutert.

Es zeigen jeweils in stark vereinfachter, schematischer Darstellung:

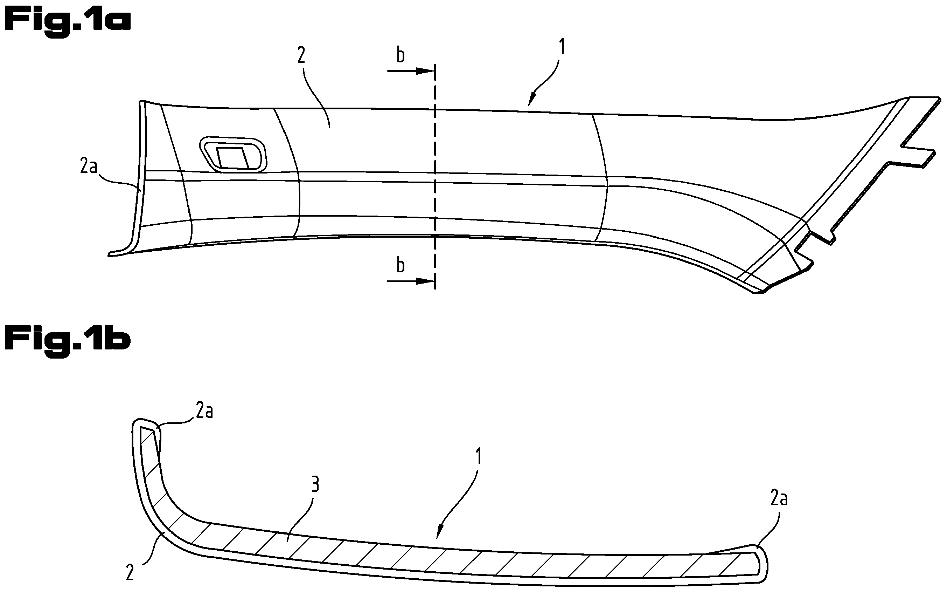

- Fig. 1a: eine Ansicht eines Verbundformteils, wie er mit einer erfindungsgemässen Vorrichtung hergestellt werden kann;
- Fig. 1b: einen Schnitt durch den Verbundformteil der Fig. 1a entlang der Linie b-b;
- Fig. 2: eine schematische Darstellung einer ersten Ausführungsform einer erfindungsgemässen Vorrichtung in geschlossener Stellung;
- Fig. 3: die Vorrichtung der Fig. 2 in ganz geöffneter Ausgangsstellung;
- Fig. 4: die Vorrichtung der Fig. 2 in ganz geöffneter Ausgangsstellung, aber mit eingelegter Dekorfolie als Beispiel für eine flächenhafte Struktur;
- Fig. 5: die Vorrichtung der Fig. 2 im Zuge des Schliessvorganges, in teilweise geschlossenem Zustand;
- Fig. 6: die Vorrichtung der Fig. 2 im Zuge des Schliessvorganges, in fast geschlossenem Zustand;
- Fig. 7: die Vorrichtung der Fig. 2 in komplett geschlossenem Zustand, in welchem alle Elemente des Formwerkzeuges aneinander anliegen;
- Fig. 8: eine schematische Darstellung einer zweiten Ausführungsform einer erfindungsgemässen Vorrichtung in ganz geöffneter Ausgangsstellung;
- Fig. 9: die Vorrichtung der Fig. 8 in ganz geöffneter Ausgangsstellung, aber mit eingelegter Dekorfolie;
- Fig. 10: die Vorrichtung der Fig. 8 im Zuge des Schliessvorganges, in teilweise geschlossenem Zustand;
- Fig. 11: die Vorrichtung der Fig. 8 im Zuge des Schliessvorganges, in fast geschlossenem Zustand;
- Fig. 12: die Vorrichtung der Fig. 8 in komplett geschlossenem Zustand, in welchem alle Elemente des Formwerkzeuges aneinander anliegen;
- Fig. 13: eine schematische Darstellung einer dritten Ausführungsform einer erfindungsgemässen Vorrichtung in ganz geöffneter Ausgangsstellung, mit eingelegter Dekorfolie;
- Fig. 14: die Vorrichtung der Fig. 13 in weiter geöffnetem Zustand, zu Beginn des Einblasens von Druckluft;
- Fig. 15: die Vorrichtung der Fig. 13 im Zuge des Schliessvorganges, in teilweise geschlossenem Zustand;
- Fig. 16: die Vorrichtung der Fig. 13 in fast ganz geschlossenem Zustand;
- Fig. 17: die Vorrichtung der Fig. 13 in komplett geschlossenem Zustand;
- Fig. 18: eine schematische Darstellung einer vierten Ausführungsform einer erfindungsgemässen Vorrichtung in ganz geöffneter Ausgangsstellung;
- Fig. 19: die Vorrichtung der Fig. 18 in ganz geöffneter Ausgangsstellung, aber mit eingelegter Dekorfolie;
- Fig. 20: die Vorrichtung der Fig. 18 im Zuge des Schliessvorganges, in teilweise geschlossenem Zustand;
- Fig. 21: die Vorrichtung der Fig. 18 in komplett geschlossenem Zustand;
- Fig. 22: die Vorrichtung der Fig. 18 im Zuge des Entformungsvorganges, mit ausgefahrenem Stempelschieber;
- Fig. 23: eine schematische Darstellung einer fünften Ausführungsform einer erfindungsgemässen Vorrichtung in ganz geöffneter Ausgangsstellung;
- Fig. 24: die Vorrichtung der Fig. 24 in ganz geöffneter Ausgangsstellung, aber mit eingelegter Dekorfolie;
- Fig. 25: die Vorrichtung der Fig. 24, während der Erwärmung der eingelegten Dekorfolie, in teilweise geschlossenem Zustand;
- Fig. 26: die Vorrichtung der Fig. 24, noch immer in geöffnetem Zustand, während des Anlegens eines Vakuums und Umformung der eingelegten Dekorfolie; und
- Fig. 27: die Vorrichtung der Fig. 24 in geschlossenem Zustand, in welchem alle Elemente des Formwerkzeuges aneinander anliegen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

Die Erfindung findet Anwendung insbesondere auf die Herstellung von hinterspritzten Verbundformteilen1, bei welchen eine flächenhafte Struktur 2, insbesondere eine flächenhafte Dekorstruktur wie beispielsweise eine Dekorfolie oder ein Dekorgewebe, zumindest einen Teil der Oberfläche des Verbundformteils 1 umspannt. Die Struktur 2 ist hinterspritzt mit einer zuerst flüssigen, dann aushärtenden Trägerstruktur 3. Die flächenhafte Struktur 2 weist am Rand des Formteils 1 einen Umbug 2a auf, der sich bis zum Rand des Verbundformteils 1, aber auch um den Rand herum, sogar bis auf die nicht mit flächenhafter Struktur 2 bedeckte Rückseite erstrecken kann. Besonders bevorzugt werden derartige Verbundformteile als Verkleidungselemente im Innenraum von Fahrzeugen verwendet.

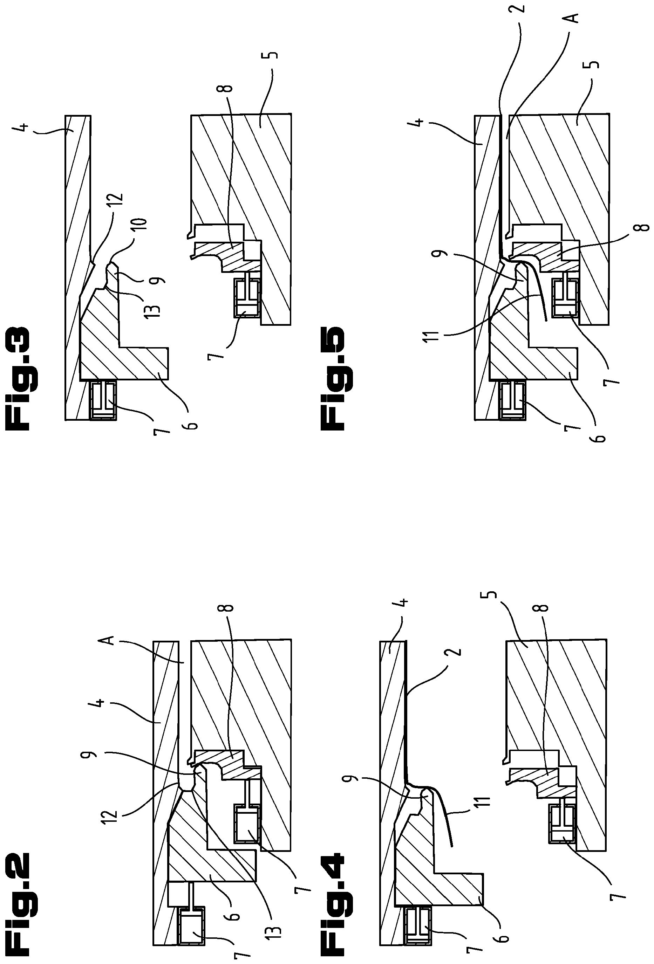

Die in Fig. 2 in einer ersten Ausführungsform schematisch dargestellte Vorrichtung zu Herstellung derartiger Verbundformteile umfasst mehrere in herkömmlicher Weise gegeneinander mittels ansteuerbaren Antrieben beweglich angeordnete Formelemente, insbesondere eine Matrize 4 zur Aufnahme der flächenhaften Dekorstruktur 2 (siehe Fig. 4) in einem unverbundenen Zustand, einen Stempel 5 und einen Matrizenschieber 6. Durch Wirkung der hier beispielhaft als fluidische Arbeitszylinder dargestellten Antriebe 7 sind der Stempel 5, die Matrize 4 und der Matrizenschieber 6 derart relativ zueinander bewegbar angeordnet, dass sie in einem geschlossenen Zustand gemeinsam einen Hohlraum A definieren, welcher im Wesentlichen der Form des herzustellenden Verbundformteils 1 entspricht.

Diese erste Ausführungsform einer erfindungsgemässen Vorrichtung weist weiters einen Voreiler 8 auf, welcher an einer Seitenwange des Stempels 5 dem Matrizenschieber 6 zugewandt angeordnet ist, vorzugsweise zumindest teilweise in eine Ausnehmung des Stempels 5 aufnehmbar. Der Matrizenschieber 6 wiederum ist mit einem Vorsprung 9 versehen, der auf den Stempel 5 hin ragt, vorzugsweise im Bereich des oberen Randes des Voreilers 8.

Am äussersten Rand des Vorsprunges 9 des Matrizenschiebers 6 ist einen Schneide 10 ausgebildet, welche im geschlossenen Zustand der Formelemente 4, 5, 6, 8 den Abstand zwischen dem Vorsprung 9 des Matrizenschiebers 6 und dem Stempel 5, hier bevorzugt dem Voreiler 8, zu mindestens 80 % überbrückt. Die Schneide 10 kann auch derart ausgebildet sein, dass sie für eine einfache und mit geringer Belastung des umgebenden Bereiches des Verbundformteils einhergehende Ablösung des überstehenden Randstreifens 11 der Dekorstruktur 2 bevorzugt mindestens 90 %, besonders bevorzugt mindestens 95 % des Abstandes überbrückt. Die Schneide 10 kann auch in geschlossenem Zustand der Vorrichtung am gegenüberliegenden Bauteil komplett aufliegen und damit das Material der flächenhaften Struktur 2 gänzlich durchtrennen.

Anstelle einer durchgehenden Schneide 10 sind auch andere Konstruktionen möglich, beispielsweise eine Reihe von einzelnen Stiften oder Nadeln, um eine Perforierung des Materials der flächenhaften Struktur 2 zu erzielen, wo dessen Randstreifen 11 abgetrennt werden kann.

Der Matrizenschieber 6 und der Voreiler 8 sind über ihre Antriebe in paralleler Richtung unabhängig voneinander bewegbar, insbesondere derart aufeinander zu bewegbar, dass ein Übergang zwischen dem Randstreifen 11 und dem Bereich der flächenhaften Struktur 2, die am Verbundformteil 1 verbleiben soll, zwischen diesen beiden parallel bewegbaren Bauteilen 6, 8 gegriffen, fixiert und im Zuge des Schliessens des Formwerkzeuges gezielt in beliebigem Mass umgebugt werden kann.

An der Matrize 4 ist ein gekrümmter Abschnitt 12 ausgebildet und am Matrizenschieber 6 ist ebenfalls ein gekrümmter Abschnitt 13 ausgebildet, welchen Abschnitte 12, 13 einander in geschlossenem Zustand der Vorrichtung direkt gegenüber liegen und gemeinsam einen ersten, den Umbug 2a der flächenhaften Struktur 2 definierenden gekrümmten Bereich formen. Die Schneide 10 des Matrizenschiebers 6 und die ihr gegenüberliegende Fläche des Voreilers 8 ist um die gewünschte Breite des Umbugs 2a auf der Hinterseite des Verbundformteils 1 beabstandet zu den Abschnitten 12, 13 und bildet einen zweiten Bereich, in dem der den umgebugten Rand der Dekorstruktur 2 zuerst fixierende und anschliessend abquetschende bzw. gänzlich durchtrennenden Bereich ausgebildet ist.

Zur Herstellung eines Verbundformteils 1 wie eingangs charakterisiert, wird die Vorrichtung in die in Fig. 3 dargestellte komplett geöffnete Stellung gebracht. Auch der Matrizenschieber 6 ist ganz nach aussen gefahren und der Voreiler 8 ist komplett vom Stempel 5 ausgefahren. Eine noch unverbundene flächenhaften Struktur 2 wird - wie in Fig. 4 dargestellt - in die Matrize 4 der Vorrichtung eingelegt, so dass sie mindestens einem Teil einer Kontur des zu erzielenden Verbundformteils entspricht, dabei aber mit einem Randstreifen 11 über dessen Rand übersteht. Allenfalls kann die flächenhafte Struktur 2 bereits mit einem teilweisen Umbug versehen sein.

Anschliessend erfolgt das Überführen der Vorrichtung in eine Geschlossen-Position, um damit schliesslich einen die Form des herzustellenden Verbundformteils 1 im Wesentlichen bestimmenden Hohlraum A zwischen den Formelementen 4, 5, 6, 8 auszubilden. Eine Zwischenstellung in diesem Bewegungsablauf ist in Fig. 5 dargestellt, mit bereits aneinander angenäherter Matrize 4 und Stempel 5, während der Matrizenschieber 6 erst zu einem geringen Teil auf den noch gänzlich ausgefahrenen Voreiler 8 hin zugefahren ist.

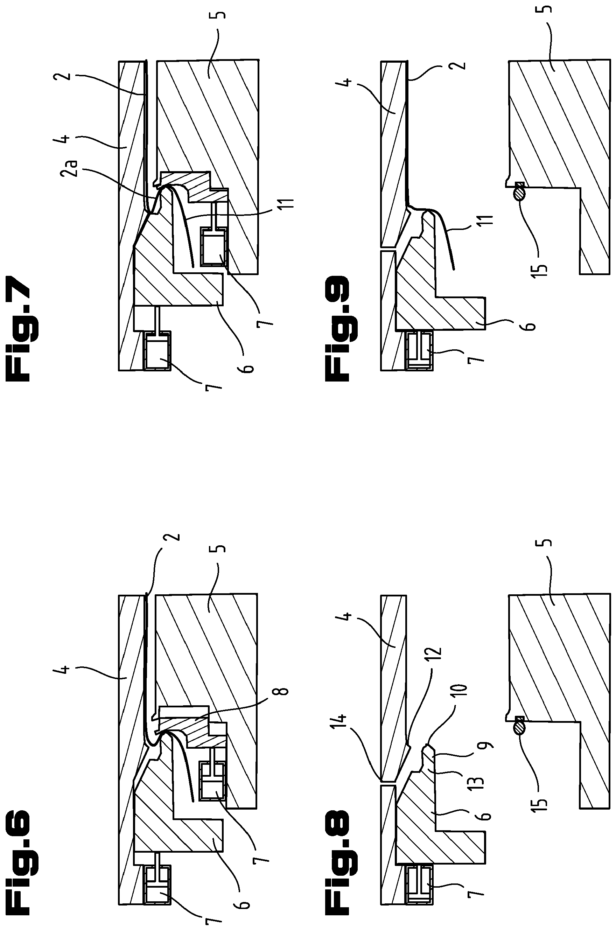

In weiterer Folge wird der Matrizenschieber 6 weiter auf den Stempel 5 hin bewegt und damit kommt schliesslich der Vorsprung 9 des Matrizenschiebers 6, insbesondere dessen Schneide 10, in Kontakt - oder wie oben erläutert wurde fast in Kontakt - mit dem ausgefahrenen Voreiler 8. Das bewirkt, dass das Material der flächenhaften Struktur 2 zwischen dem Vorsprung 9 und dem Voreiler 8 gegriffen bzw. eingespannt wird (siehe Fig. 6) und während des fortgesetzten Überführens der Vorrichtung in die Geschlossen-Position der äussere Rand des Umbugs 2a der flächenhaften Struktur 2 zwischen den nun parallel bewegten Bauteilen Matrizenschieber 6 und Voreiler 8 fixiert und mit deren Schliessbewegung mitgeführt wird.

Spätestens bei Erreichen der in Fig. 7 dargestellten komplett geschlossenen Stellung der Formelemente 4, 5, 6, 8 wird die noch flüssige Trägerstruktur 3 in den Hohlraum A eingebracht. Danach erfolgt, gleichzeitig oder in beliebiger Reihenfolge, das Abtrennen des über den äusseren Rand des Umbugs 2a hinausragenden Streifens 11 der flächenhaften Struktur 2 auf der Rückseite des Verbundformteils 1 und das Aushärten. Schliesslich wird die Vorrichtung wieder geöffnet, um den fertigen Verbundformteil 1 zu entformen. Wie angedeutet können manche Verfahrensschritte gleichzeitig und/oder in unterschiedlicher Reihenfolge durchgeführt werden.

Durch das Fixieren zwischen Matrizenschieber 6 und Voreiler 8 und das aktive Mitnehmen des geklemmten Randes der flächenhaften Struktur 2 beim Schliessen der Formelemente 4, 5, 6, 8, hier insbesondere beim gemeinsamen Einfahren von Matrizenschieber 6 und Voreiler 8 wird vor oder während des Einführens der ungehärteten Trägerstruktur 3 die flächenhafte Struktur 2 im Bereich des äusseren Randes des Umbugs 2a fixiert und jedenfalls vor dem Abtrennen des über den äusseren Rand des Umbugs 2a hinausragenden Streifens 11 der flächenhaften Dekorstruktur 2 auf der Rückseite des Verbundformteils 1 vollständig umgebugt. Damit können in einfacher Weise auch Umbuge von mehr als 90° hergestellt werden, mit genau vordefinierter Umbuggeometrie.

Eine weitere Ausführungsform einer Vorrichtung gemäss der Erfindung ist in Fig. 8 in geöffnetem Zustand abgebildet. Über zumindest eine der Seite des aus Hohlraums A herausführende Absaugöffnung 14 aufweist, die an eine Vorrichtung zur Luftabsaugung (nicht dargestellt) anschliessbar ist. Die dem Matrizenschieber 6 zugewandte Seitenwange des Stempels 5 ist mit einer Dichtung 15 versehen.

Zur Herstellung eines Verbundformteils 1 wird die flächenhafte Struktur 2 wie in Fig. 9 dargestellt in die geöffnete Vorrichtung eingelegt. Auch der Matrizenschieber 6 ist ganz nach aussen vom Stempel 5 weg gefahren. Ein Randstreifen 11 der flächenhaften Struktur 2 überragt dabei den Bereich des Hohlraums A und verläuft dabei über den Vorsprung 9 des Matrizenschiebers hinweg.

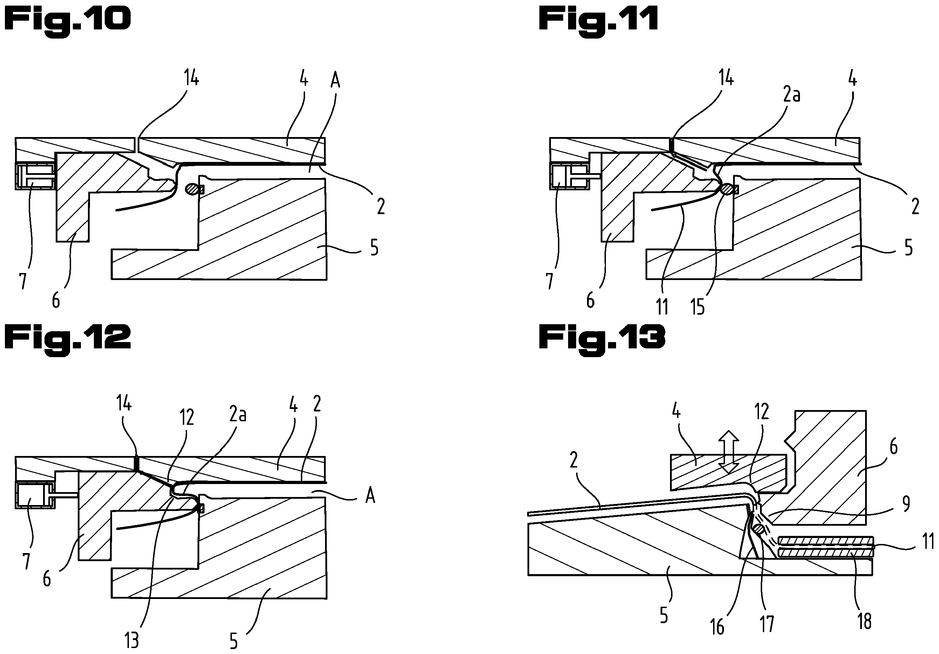

Anschliessend erfolgt das Überführen der Vorrichtung in eine Geschlossen-Position, wobei bereits mit dem Absaugen der Luft zwischen der flächenhaften Struktur 2 und der Matrize 4 durch die Absaugöffnung 14 hindurch begonnen werden kann. Eine Zwischenstellung in diesem Bewegungsablauf ist in Fig. 10 dargestellt, mit bereits aneinander angenäherter Matrize 4 und Stempel 5, während der Matrizenschieber 6 erst zu einem geringen Teil auf den Stempel 5 hin zugefahren ist.

In weiterer Folge wird der Matrizenschieber 6 weiter auf den Stempel 5 hin bewegt und damit kommt schliesslich wie in Fig. 11 dargestellt der Vorsprung 9 des Matrizenschiebers 6 mit seinem Bereich unmittelbar ausserhalb der Schneide 10 - in Bezug auf den Hohlraum A gesehen - in Kontakt mit der Dichtung 15. Dadurch wird einerseits das Material der flächenhaften Struktur 2 am Übergang zwischen dem Umbug 2a und dem abzutrennenden Randstreifen 11 zwischen dem Vorsprung 9 und dem Stempel 5 gegriffen bzw. eingespannt. Andererseits wird dadurch aber auch die Wirkung des angelegten Vakuums besser zur Geltung gebracht.

Während und nach der Fortsetzung des Schliessens der Formelemente 4, 5, 6 der Vorrichtung wird das Material der flächenhaften Struktur 2 in den gekrümmten Bereich 12, 13 zwischen Matrize 4 und Matrizenschieber 6 hineingesaugt und legt sich mit dem äusseren Rand auf der Vorderseite des Verbundformteils als auch mit dem Umbug 2a an diese Formelemente 4,6 an, wobei der Randbereich unmittelbar anschliessend an den Umbug 2a weiterhin zwischen dem Matrizenschieber 6 und dem Stempel, insbesondere zwischen dem Vorsprung 9 des Matrizenschiebers 6 und der Dichtung 15 am Stempel 5 fixiert bleibt und entsprechend der Bewegung des Matrizenschiebers 6 geformt wird. Diese Stellung ist in Fig. 12 dargestellt.

Betreffend das Einbringen der noch nicht ausgehärteten Trägerstruktur, das Aushärten, Abtrennen des Randstreifens 11 sowie das Entformen des fertigen Verbundformteils 1 gelten die für die erste Ausführungsform gemachten Ausführungen.

Eine beispielhafte Position für eine Absaugöffnung 14 ist in Fig. 11 und 12 an einer Position in der Matrize 4 dargestellt, die sehr weit entfernt von den gekrümmten Abschnitten 12, 13 bzw. dem Rand des Hohlraums A ist. Vorteilhafterweise liegt die Absaugöffnung 14 nahe den am stärksten gekrümmten Bereichen, wobei jedoch sichergestellt werden muss, dass kein Material der Trägerstruktur 3 die Absaugöffnung 14 verstopfen kann.

Eine weitere Möglichkeit für die aktive Formgebung der flächenhaften Struktur 2 in der Vorrichtung im Bereich des Umbugs 2a am Rand des Verbundformteils 1 ist es auch, deren Randbereich mittels Druckluft gegen die zur Ausbildung des Umbugs 2a vorgesehene Anordnung der gekrümmten Abschnitte 12, 13 an Matrize 4 und Matrizenschieber 6 zu drücken. Dazu ist gemäss einer weiteren, in Fig. 13 dargestellten Ausführungsform der erfindungsgemässen Vorrichtung der Stempel 5 mit zumindest einer in den Hohlraum A führenden und an eine Druckluftquelle (nicht dargestellt) anschliessbare Druckluftzuführung 16 aufweist. Der Querschnitt der Druckluftzuführungen 16 als auch der Absaugöffnungen 14 kann je nach Bedarf beliebig geformt sein. So sind runde Öffnungen möglich, aber auch Öffnungen in Form von Langlöchern, die gerade oder auch mehrfach gekrümmt sein können, ringförmige Öffnungen, etc.

Um die Wirkung der Druckluft noch besser zur Geltung zu bringen, kann an der Seitenwange des Stempels 5 wieder eine Dichtung 17 angeordnet sein. In Bezug auf den Umbug 2a, und den Kontaktbereich des Vorsprunges 9 des Matrizenschiebers 6 mit dem Stempel 5 ist die Dichtung 17 unmittelbar anschliessend und ausserhalb an der Seitenwange des Stempels 5 angeordnet.

Vorteilhafterweise ist an der Aussenseite zwischen dem Matrizenschieber 6 und dem Stempel 5 eine Spannanordnung 18 für den überstehenden Rand 11 der flächenhaften Struktur 2 vorgesehen.

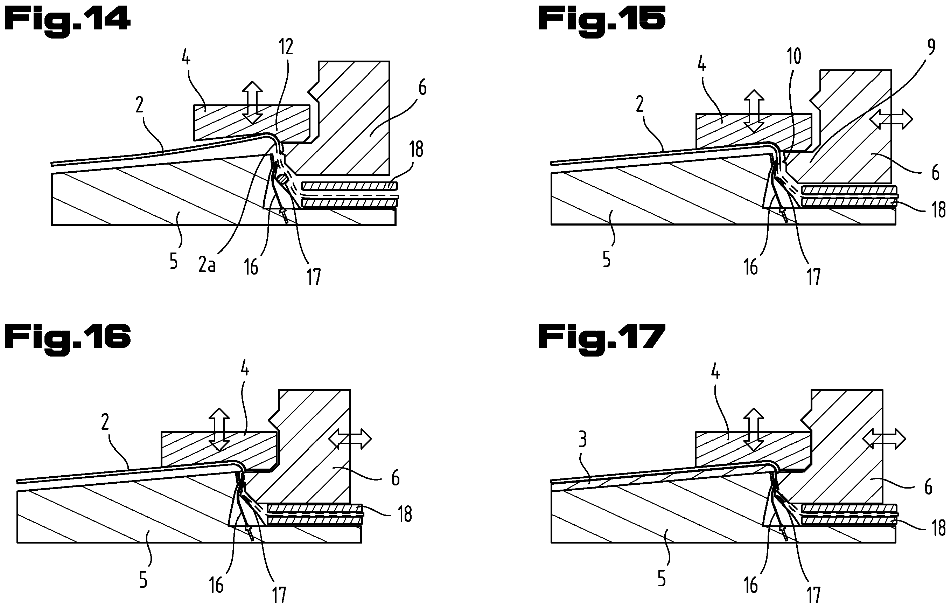

Nach dem Einlegen der flächenhaften Struktur 2 in die geöffnete Vorrichtung der Fig. 13 wird die Vorrichtung geschlossen, bis der Matrizenschieber 6 trotz seiner geöffneten Stellung entfernt vom Stempel 5 mit seinem Vorsprung 9 an der Dichtung 17 anliegt, d.h. Matrize 4 und Stempel 5 werden einander angenähert. Dann wird Druckluft durch die Druckluftzuführung 16 eingeblasen, die flächenhafte Struktur 2 wird aufgeblasen und legt sich an die Matrize 4 an, insbesondere auch im gekrümmten Randbereich 12, der einen Teil des Umbugs 2a aufnimmt (siehe Fig. 14).

Der Schliessvorgang der Formelemente 4, 5 und nun auch dem Matrizenschiebers 6 wird weiter fortgesetzt, ebenso das Einblasen von Druckluft. Schliesslich wird nach Durchlaufen der Stellungen der Fig. 16 der komplett geschlossene Zustand der Vorrichtung erreicht, in welchem der Matrizenschieber 6 maximal auf den Stempel 5 hin verfahren ist und die Schneide 10 am Vorsprung 9 des Matrizenschiebers 6, welche bislang nur für die Fixierung des Randes der flächenhaften Struktur 2 gesorgt hatte und diesen Rand im Zuge der Bewegung des Matrizenschiebers 6 mitgenommen und dadurch umgebugt hatte, den Randbereich 11 der flächenhaften Struktur 2 abtrennt oder durch Abquetschen oder Perforieren oder ähnliche Bearbeitung zum Abtrennen vorbereitet. Während oder nach dieser Bearbeitung am Umbug 2a wird die flächenhaften Struktur 2 mit der Trägerstruktur 3 hinterspritzt. Nach dem Aushärten wird zuerst der Matrizenschieber 6 wieder in die geöffnete Stellung gefahren, anschliessend auch Matrize 4 und Stempel 5, so dass der fertige Verbundformteil 1 entformt werden kann.

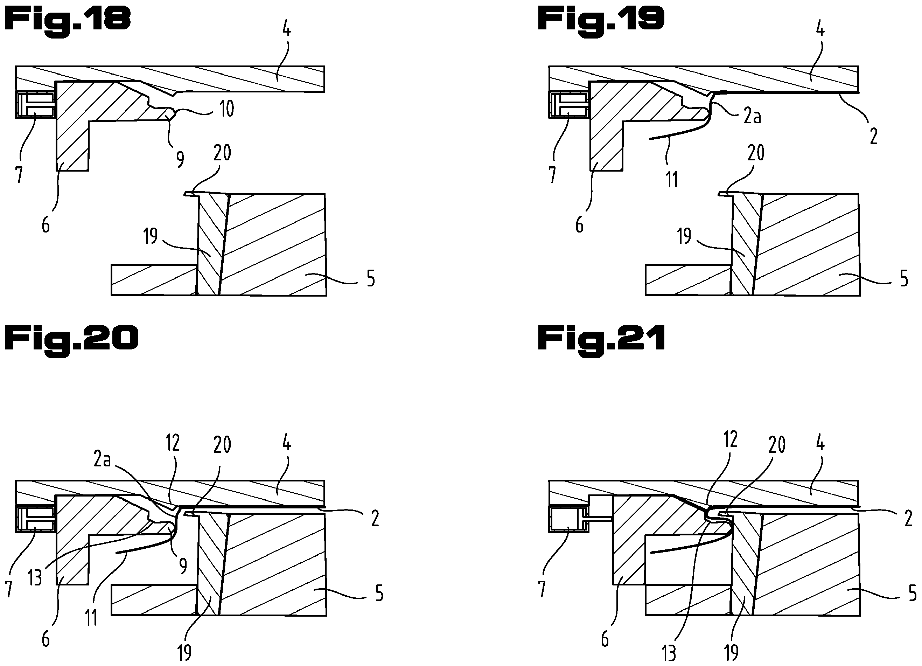

Die Formung des gekrümmten Abschnittes des Umbugs 2a am Rand der flächenhaften Struktur 2 kann auch durch eine weitere Ausführungsform der erfindungsgemässen Vorrichtung bewirkt werden. Diese in Fig. 18 in geöffnetem Zustand dargestellte Vorrichtung weist an der Seitenwange des Stempels 5 einen Stempelschieber 19 auf. Dieser Stempelschieber 19 ist - wie in Fig. 21 in Zusammenhang mit dem Entformen dargestellt ist - nicht parallel zum Matrizenschieber 6 verfahrbar, sondern in zumindest einer Richtung quer zur Bewegungsrichtung des Matrizenschiebers 6.

Der Stempelschieber 19 ist an seinem oberen Rand, welcher im Bereich des Umbugs 2a der flächenhaften Struktur zu liegen kommt, mit einer in den Umbugbereich ragenden Kante 20 versehen. Anstelle einer durchgehenden Kante 20 oder Schneide könnten auch diskrete, beabstandete Vorsprünge, ähnlich einem Rechen oder Kamm mit einer Mehrzahl von Zinken, oder ähnliche und gleichartig wirkende Anordnungen vorhanden sein, oder auch Kombinationen derartiger unterschiedlicher Elemente. Allenfalls sind diese Elemente beweglich, vorzugsweise parallel zur Bewegungsrichtung des Matrizenschiebers 6 oder in anderer Richtung in den Umbugbereich hin ausfahrbar.

Nach Einlegen der flächenhaften Struktur 2 in die Matrize 4 in die komplett geöffneten Formelemente 4, 5, 6 (Fig. 19) wird die Vorrichtung einmal teilweise geschlossen, wobei bei Annäherung von Matrize 4 und Stempel 5 die Kante 20 oder gleichartig wirkende Elemente den Randbereich der flächenhaften Struktur im Bereich des gekrümmten Abschnitts 12 der Matrize 4 halten. Beim anschliessenden Schliessvorgang - siehe dazu Fig. 20 - auch des Matrizenschiebers 6 wird der Rand der flächenhaften Struktur 2 am Vorsprung 9 bzw. einer dort ausgebildeten Schneide 10 mitgenommen und derart der Randbereich der flächenhaften Struktur 2 zum Umbug 2a geformt. Bei vollständig geschlossener Vorrichtung ragt die Kante 20 in den gekrümmten, den Umbug 2a definierenden Bereich, der durch die gekrümmten Abschnitt 12, 13 an Matrize 4 und Matrizenschieber 6 gebildet ist. Diese Stellung ist in Fig. 21 dargestellt, wobei der Randbereich 11 aussen am Umbug 2a anschliessend zwischen der Schneide 10 des Matrizenschiebers 6 und der Oberfläche des Stempelschiebers 19 gequetscht oder abgetrennt ist.

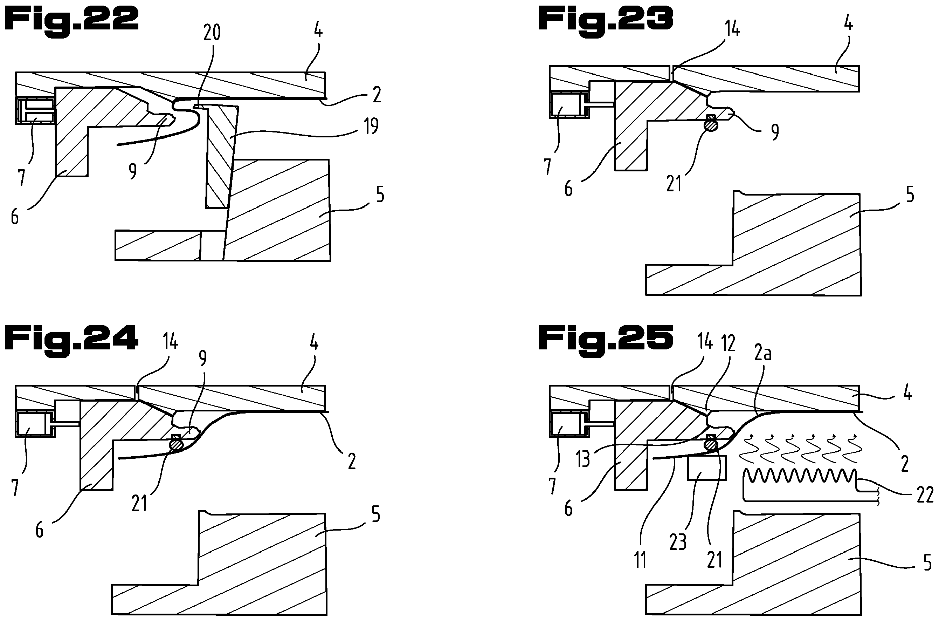

Beim Entformen wird, wie in Fig. 22 dargestellt ist, der Stempelschieber 19 vorzugsweise entlang einer in Bezug auf die Bewegungsrichtung von Matrize 4 und Stempel 5 schrägen Richtung vom Stempel 5 weg in Richtung Matrize 4 verfahren. Das bewirkt, dass die Kante 20 nach innen hin aus dem Bereich innerhalb des Umbugs 2b herausgefahren wird und den Entformvorgang nicht behindert.

Eine weitere Ausführungsform sieht die aktive Bildung des Umbugs 2a mittels Thermoformung der flächenhaften Struktur vor. Die wieder für den Beginn eines Zyklus des Herstellungsvorganges bereitgestellte Vorrichtung dafür ist in Fig. 23 dargestellt. Die Formelemente 4, 5 sind ganz geöffnet, während der Matrizenschieber 6 aber in Richtung Matrize 4 hin geschlossen ist. An der dem Stempel 5 zugewandten Seite des Vorsprunges 9 des Matrizenschiebers 6 ist eine Dichtung 21 angeordnet.

Nach Einlegen der noch kalten flächenhaften Struktur 2 - wie in Fig. 24 dargestellt - wird ein Heizelement 22 in das Werkzeug, zwischen Matrize 4 und Stempel 5, eingebracht, beispielsweise über ein Automationssystem, einen Roboterarm oder auch manuell. Allenfalls kann ein Heizelement 22 auch im Stempel 5 eingebaut sein, allenfalls können Heizelemente 22 alternativ oder kumulativ in jedem der Formelemente 4, 5, 6 vorhanden sein können. Vorteilhafterweise wird auch ein Spannrahmen 23 in das Werkzeug eingebracht oder ist ein integraler Teil davon, der die Dekorfolie 2 gegen die Dichtung 21 drückt. Auch während das oder jedes Heizelement 22 aktiviert ist, bleibt der Matrizenschieber 6, auf dessen Dichtung 21 die flächenhafte Struktur 2 mit ihrem Randbereich aufliegt, immer noch geschlossen. Durch die Wärme des Heizelementes 22 wird das Material schliesslich erweicht, was zum Anlegen an die Kontur der Matrize 4 führt, insbesondere auch im gekrümmten Umbugbereich der Abschnitte 12, 13. Auch alle anderen Arten von definierter Herstellung des Umbugs 2a durch aktives Fixieren und Mitführen des umgebugten Randbereiches beim Schliessen der Formelemente - wie beispielhaft in den vorhergehenden Absätzen im Zusammenhang mit den übrigen Ausführungsbeispielen der Erfindung erläutert - können durch Erweichen der flächenhaften Struktur 2 unterstützt werden. Überhaupt können alle genannten Verfahrensvarianten auch in beliebigen Kombinationen eingesetzt werden, wobei die Vorrichtungen mit Kombinationen der beschriebenen Umbug-Anordnungen ausgestattet sein können.

Beispielhaft ist in den Fig. 23 bis 27 eine Absaugöffnung 14 in der Matrize 4 dargestellt, wobei durch Anlegen eines Unterdrucks die Umformung der Struktur 2 insbesondere im eigentlichen Umbugbereich unterstützt wird, indem der Randbereich der flächenhaften Struktur in den gekrümmten Abschnitt 12, 13 hineingesaugt wird und sich an die Wandung der Matrize 4 und des Matrizenschiebers 6 anlegt.

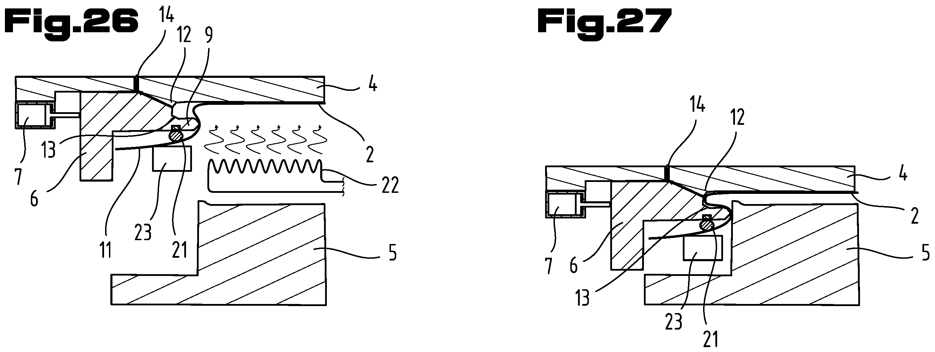

Schliesslich werden die Formelement 4, 5, 6 geschlossen, wobei gegebenenfalls der Matrizenschieber 6 nochmals leicht geöffnet werden kann, und es wird die Vorrichtung in die Stellung der Fig. 27 gebracht. Anschliessend werden in beliebiger Reihenfolge der Randbereich 11 der flächenhaften Struktur 2 durch Abquetschen oder Abschneiden mittels der Schneide 10 am Stempel 5 oder vollständiges Durchtrennen durch die Schneide abgetrennt und die Trägerstruktur 3 in nicht ausgehärtetem Zustand in den Hohlraum zwischen den Formelementen 4, 5, 6 eingebracht. Bei bestimmten Varianten des Verfahrens wird der Randbereich zur Bildung des Umbugs 2a beim Schliessvorgang durch die Reibung an der Dichtung 21 fixiert und aktiv unter Bildung des Umbugs bei der Schliessbewegung des Matrizenschiebers 6 mitgeführt.

Durch die bei allen erfindungsgemässen Ausführungsformen vorgesehen Fixierung des Randbereichs der flächenhaften Struktur an zumindest einem der Formelemente 4, 5, 8 oder zwischen zwei Formelementen 6, 8 können genau definierte Umbuge auch von mehr als 90° sicher und reproduzierbar erreicht werden, indem der Rand der Struktur 2 im Spritzgusswerkzeug gezielt in die Umbuggeometrie gefaltet wird. Diese wird vorzugsweise durch die gekrümmt ausgebildeten Abschnitte 12, 13 an den Formelementen, insbesondere der Matrize 4 und dem Matrizenschieber 6, definiert. Nach dem Hinterspritzen und Entformen ist das Verbundformteil 1 fertig umgebugt und beschnitten.

### Bezugszeichenaufstellung

- 1: Verbundformteil
- 2: Flächenhafte Struktur
- 2a: Umbug
- 3: Trägerstruktur
- 4: Matrize

- 5: Stempel
- 6: Matrizenschieber
- 7: Antrieb
- 8: Voreiler
- 9: Vorsprung Matrizenschieber

- 10: Schneide Matrizenschieber
- 11: Randstreifen
- 12: Gekrümmter Abschnitt Matrize
- 13: Gekrümmter Abschnitt Matrizenschieber
- 14: Absaugöffnung Matrize

- 15: Dichtung Stempel
- 16: Druckluftzuführung
- 17: Dichtung Stempel
- 18: Spannanordnung
- 19: Stempelschieber

- 20: Kante Stempelschieber
- 21: Dichtung Matrizenschieber
- 22: Externes Heizelement
- 23: Spannelement
- A: Formhohlraum

## Patentansprüche

1. Vorrichtung zur Herstellung eines Verbundformteils (1) mit einer mindestens einen Teil des Verbundformteils, insbesondere einen Teil der Oberfläche des Verbundformteils, umspannenden flächenhaften Struktur (2), insbesondere flächenhaften Dekorstruktur, und einer zumindest teilweise gespritzten Trägerstruktur (3), umfassend eine Matrize (4) zur Aufnahme der flächenhaften Struktur (2) in einem unverbundenen Zustand, einen Stempel (5) und einen Matrizenschieber (6), wobei Stempel (5), Matrize (4) und Matrizenschieber (6) derart relativ zueinander bewegbar angeordnet sind, dass sie in einem geschlossenen Zustand gemeinsam einen Hohlraum (A) definieren, welcher im Wesentlichen der Form des herzustellenden Verbundformteils (1) entspricht,
wobei
durch zumindest einen Bereich und/oder an mindestens einem Bereich eines der Bauteile Matrizenschieber (6), Stempel (5) bzw. Matrize (4) eine Umbug-Anordnung mit einem ersten, den Umbug definierenden gekrümmten Bereich (12, 13) und mit einem davon beabstandeten zweiten, den umgebugten Rand der flächenhaften Struktur (2) fixierenden und/oder abquetschenden bzw. gänzlich durchtrennenden Bereich (8, 9, 10, 15, 17, 20, 21) ausgebildet ist, **dadurch gekennzeichnet, dass**
der Stempel (5) im Bereich seiner Seitenwange, welcher Bereich dem Matrizenschieber (6) zugewandt ist, ein in paralleler Richtung zum Matrizenschieber (6) bewegliches Element zur Fixierung der flächenhaften Struktur aufweist.

2. Vorrichtung nach Anspruch 1, **dadurch gekennzeichnet, dass** im zweiten Bereich (8, 9, 10, 15, 17, 20, 21) mindestens einer der Bauteile Matrizenschieber (6), Stempel (5) oder Matrize (4), vorzugsweise der Matrizenschieber (6), eine Schneide (10) aufweist, welche im geschlossenen Zustand einen Abstand zwischen einem gegenüberliegenden Bauteil zu mindestens 80 %, bevorzugt mindestens 90 %, besonders bevorzugt mindestens 95 % bis nahezu zur Kontaktierung der gegenüberliegenden Fläche, überbrückt.

3. Vorrichtung nach Anspruch 1 oder 2, **dadurch gekennzeichnet, dass** Matrize (4) und Schieber (6) im geschlossenen Zustand zusammen den ersten, den Umbug definierenden Bereich (12, 13) des Hohlraums (A) bilden und auf einem dem Stempel (5) zugewandten, vorzugweise vorspringenden, Rand (9) des Schiebers (6) die Schneide (10) ausgebildet ist.

4. Vorrichtung nach einem der Ansprüche 1 bis 3, **dadurch gekennzeichnet, dass** das in paralleler Richtung zum Matrizenschieber (6) bewegliche Element ein Voreiler (8) ist, wobei der Matrizenschieber (6) und der Voreiler (8) unabhängig voneinander bewegbar sind.

5. Vorrichtung nach einem der Ansprüche 2 bis 4, **dadurch gekennzeichnet, dass** die Matrize (4) zumindest eine aus dem Hohlraum (A) herausführende Absaugöffnung (14) aufweist, die an eine Vorrichtung zur Luftabsaugung anschliessbar ist.

6. Vorrichtung nach einem der Ansprüche 2 bis 5, **dadurch gekennzeichnet, dass** der Stempel (5) zumindest eine in den Hohlraum (A) führende und an eine Druckluftquelle anschliessbare Druckluftzuführung (16) aufweist.

7. Vorrichtung nach Anspruch 5 oder 6, **dadurch gekennzeichnet, dass** an der Seitenwange des Stempels (5) unmittelbar anschliessend an die Kontaktstelle mit dem Matrizenschieber (6) an der Aussenseite des Hohlraums (A) eine Dichtung (17) angebracht ist.

8. Vorrichtung nach einem der Ansprüche 2 bis 7, **dadurch gekennzeichnet, dass** der Stempel (5) im dem Matrizenschieber (6) zugewandten Bereich seiner Seitenwange ein in paralleler Richtung zur Matrize (4) bewegliches Element (19) aufweist, welches eine in den Umbugbereich (12, 13) ragende Kante (20) oder Anordnung von parallelen Fingern aufweist, welche allenfalls in Richtung des gekrümmten Bereiches (12, 13) ausfahrbar sind.

9. Vorrichtung nach einem der Ansprüche 2 bis 8, **dadurch gekennzeichnet, dass** eine Heizanordnung (22) für die flächenhafte Struktur (2) vorgesehen ist, allenfalls an zumindest einem der Bauteile Matrize (4), Matrizenschieber (6) bzw. Stempel (5).

10. Verfahren zur Herstellung eines Verbundformteils (1) mit einer mindestens einen Teil der Oberfläche des Verbundformteils umspannenden flächenhaften Struktur (2), vorzugsweise Dekorstruktur, und einer zumindest teilweise gespritzten Trägerstruktur (3), umfassend die Schritte:
a) Bereitstellen einer Vorrichtung mit einer Vorrichtung nach der vorhergehenden Ansprüche mit zumindest einem Stempel (5), einer Matrize (4) und einem Matrizenschieber (6) in einer Offenposition;
b1) Einlegen einer noch unverbundenen flächenhaften Struktur (2) in die Vorrichtung, so dass die flächenhafte Struktur mindestens einem Teil einer Kontur des zu erzielenden Verbundformteils (1) entspricht;
b2) optional unter Verwendung einer mit einem Umbug teilweise vorgeformten flächenhaften Struktur (2);
c1) Überführen der Vorrichtung in eine Geschlossen-Position und Herstellung eines die Form des herzustellenden Verbundformteils (1) im Wesentlichen bestimmenden Hohlraums (A) im Inneren der Vorrichtung;
d) Einführen einer ungehärteten Trägerstruktur (3) in den Hohlraum;
e) Abtrennen eines über den äusseren Rand des Umbugs hinausragenden Streifens (11) der flächenhaften Struktur (2) auf der Rückseite des Verbundformteils (1);
f) Aushärten und anschließend
g) Entformen des Verbundformteils (1); wobei die Schritte d) bis f) in unterschiedlicher Reihenfolge und/oder zum Teil gleichzeitig durchgeführt werden können;
**dadurch gekennzeichnet, dass**
dass während des Schrittes c1) des Überführens der Vorrichtung in eine Geschlossen-Position und während Herstellung des die Form des herzustellenden Verbundformteils (1) im Wesentlichen bestimmenden Hohlraums (A) im Inneren der Vorrichtung der äussere Rand des Umbugs (2a) zwischen zwei parallel bewegten Bauteilen fixiert und mit deren Schliessbewegung mitgeführt wird, und dass vor und/oder während des Einführens der ungehärteten Trägerstruktur (3) in Schritt d) die flächenhafte Struktur (2) im Bereich des äusseren Randes des Umbugs (2a) fixiert wird.

11. Verfahren nach Anspruch 10, **dadurch gekennzeichnet, dass** vor oder während des Einführens der ungehärteten Trägerstruktur in Schritt d) und jedenfalls vor dem Abtrennen des über den äusseren Rand des Umbugs (2a) hinausragenden Streifens (11) der flächenhaften Dekorstruktur (2) auf der Rückseite des Verbundformteils (1) in Schritt e) die flächenhafte Struktur (2) vollständig umgebugt wird.

12. Verfahren nach Anspruch 10 oder 11, **dadurch gekennzeichnet**dass die flächenhafte Struktur (2), insbesondere der Randbereich mit dem Umbug (2a), durch Anlegen eines Vakuums an bzw. in die Matrize (4) bzw. den gekrümmten Bereich (12, 13) zwischen Matrize (4) und Matrizenschieber (6) angesaugt wird.

13. Verfahren nach einem der Ansprüche 10 bis 12, **dadurch gekennzeichnet, dass** die flächenhafte Struktur (2), insbesondere der Randbereich mit dem Umbug (2a), durch Anlegen eines Überdrucks an bzw. in die Matrize (4) bzw. den gekrümmten Bereich zwischen Matrize (4) und Matrizenschieber (6) angedrückt wird.

14. Verfahren nach Anspruch 12 oder 13, **dadurch gekennzeichnet, dass** der Abstand zwischen den Bauteilen zumindest während des Anlegens des Vakuums und/oder des Überdrucks abgedichtet wird.

15. Verfahren nach einem der Ansprüche 10 bis 14, **dadurch gekennzeichnet, dass** die flächenhafte Struktur (2) mittels zumindest eines mechanischen Elementes (20) in den gekrümmten Bereich von Matrize (4) und/oder Matrizenschieber (6) gedrückt wird.

16. Verfahren nach einem der Ansprüche 10 bis 15, **dadurch gekennzeichnet, dass** die flächenhafte Struktur (2) vor und/oder zumindest während des Umbugens erwärmt wird.

## Claims

1. A device for producing a composite molded part (1) having a planar structure (2), in particular a planar decorative structure, enveloping at least a part of the composite molded part, in particular a part of the surface of the composite molded part, and an at least partially injected support structure (3), comprising a matrix (4) for receiving the planar structure (2) in a non-composite state, a punch (5) and a matrix slider (6), wherein punch (5), matrix (4), and matrix slider (6) are arranged so as to be movable relative to one another, such that in a closed state, they define a cavity (A) together, which essentially corresponds to the shape of the composite molded part (1) to be produced,
wherein
an edge folding arrangement having a first curved region (12, 13) defining the folded edge and having a second region (8, 9, 10, 15, 17, 20, 21), spaced at a distance from the first, which fixes and/or pinches off and/or completely severs the edge-folded border of the planar structure (2), is formed by at least one region and/or on at least one region of one of the components matrix slider (6), punch (5) and/or matrix (4),
**characterized in that**
the punch (5) has an element for fixing the planar structure that is movable in a direction parallel to the matrix slider (6) in the region of its side wall, which region is facing the matrix slider (6).

2. The device according to claim 1, **characterized in that** in the second region (8, 9, 10, 15, 17, 20, 21), at least one of the components matrix slider (6), punch (5), or matrix (4), preferably the matrix slider (6), has a cutting edge (10), which in the closed state bridges a distance between an opposite component to at least 80 %, preferably at least 90 %, particularly preferably at least 95 % until almost contacting the opposite surface.

3. The device according to claim 1 or 2, **characterized in that** the matrix (4) and the slider (6), in the closed state, together form the first region (12, 13) of the cavity (A) defining the folded edge, and the cutting edge (10) is formed on a, preferably protruding, border (9) of the slider (6) facing the punch (5).

4. The device according to one of claims 1 to 3, **characterized in that** the element movable in a parallel direction to the matrix slider (6) is an advancing tool (8), wherein the matrix slider (6) and the advancing tool (8) are movable independently of one another.

5. The device according to one of claims 2 to 4, **characterized in that** the matrix (4) has at least one suction opening (14) leading out of the cavity (A), which suction opening (14) can be connected to a device for air extraction.

6. The device according to one of claims 2 to 5, **characterized in that** the punch (5) has at least one compressed air feed (16) leading into the cavity (A) and connectable to a compressed air source.

7. The device according to claim 5 or 6, **characterized in that** a seal (17) is installed on the side wall of the punch (5), directly adjoining the contact point with the matrix slider (6) on the outside of the cavity (A).

8. The device according to one of claims 2 to 7, **characterized in that** in the region of its side wall facing the matrix slider (6), the punch (5) has an element (19) that is movable in a direction parallel to the matrix (4), which element (19) has an edge (20) or an arrangement of parallel fingers projecting into the edge folding region (12, 13), which are possibly extendable in the direction of the curved region (12, 13).

9. The device according to one of claims 2 to 8, **characterized in that** a heating arrangement (22) for the planar structure (2) is provided, possibly on at least one of the components matrix (4), matrix slider (6) and/or punch (5).

10. A method for producing a composite molded part (1) with a planar structure (2), preferably a decorative structure, enveloping at least a part of the surface of the composite molded part, and an at least partially injected support structure (3), comprising the steps of:
a) providing a device with a device according to the preceding claims with at least a punch (5), a matrix (4), and a matrix slider (6) in an open position;
b1) inserting a not yet composite planar structure (2) into the device, such that the planar structure corresponds to at least a part of a contour of the composite molded part (1) to be obtained;
b2) optionally using a planar structure (2) partially preformed with a folded edge;
c) transferring the device into a closed position and creating a cavity (A) essentially determining the shape of the composite molded part (1) to be produced inside the device;
d) inserting an uncured support structure (3) into the cavity;
e) removing a strip (11) of the planar structure (2) protruding beyond the border of the folded outer edge on the rear side of the composite molded part (1);
f) curing and subsequently
g) demolding the composite molded part (1), wherein steps d) to f) may be performed in a different order and/or to some extent simultaneously;
**characterized in that**
that during step c1) of transferring the device in a closed position and during the creation of the cavity (A) inside the device essentially determining the shape of the composite molded part (1) to be produced, the outer border of the folded edge (2a) is fixed between two components moved in parallel with one another and is carried along with their closing movement, and that prior to and/or while introducing the uncured support structure (3) in step d), the planar structure (2) is fixed in the region of the outer border of the folded edge (2a).

11. The method according to claim 10, **characterized in that**, the planar decorative structure (2) is fully edge-folded prior to or during the introduction of the uncured support structure in step d) and in any case prior to the removal of the strip (11) of the planar decorative Structure (2) protruding beyond the outer border of the folded edge (2a) on the rear side of the composite molded part (1) in step e).

12. The method according to claim 10 or 11, **characterized in** the planar structure (2), in particular the border region having the folded edge (2a), is sucked onto and/or into the matrix (4) and/or the curved region (12, 13) between matrix (4) and matrix slider (6) by applying a vacuum.

13. The method according to one of claims 10 to 12, **characterized in that** the planar structure (2), in particular the border region having the folded edge (2a), is pressed onto and/or into the matrix (4) and/or the curved region between matrix (4) and matrix slider (6) by applying an excess pressure.

14. The method according to claim 12 or 13, **characterized in that** the distance between the components is sealed at least during the application of the vacuum and/or the excess pressure.

15. The method according to one of claims 10 to 14, **characterized in that** the planar structure (2) is pressed into the curved region of matrix (4) and/or matrix slider (6) by means of at least one mechanical element (20).

16. The method according to one of claims 10 to 15, **characterized in that** the planar structure (2) is heated prior to and/or at least during the edge folding process.

## Revendications

1. Dispositif pour la fabrication d'une pièce moulée composite (1) avec une structure de surface (2) recouvrant au moins une partie de la pièce moulée composite, plus particulièrement une partie de la surface de la pièce moulée composite, plus particulièrement une structure de décoration de surface, et une structure porteuse (3) au moins partiellement injectée, comprenant une matrice (4) pour le logement de la structure de surface (2) dans un état non relié, un poinçon (5) et un curseur de matrice (6), dans lequel le poinçon (5), la matrice (4) et le curseur de matrice (6) sont disposés de manière mobile les uns par rapport aux autres de sorte que, dans un état fermé, ils définissent ensemble une cavité (A) qui correspond globalement à la forme de la pièce moulée composite (1) à fabriquer,
dans lequel
à travers au moins une partie et/ou au niveau d'au moins une partie d'un des composants : curseur de matrice (6) poinçon (5) ou matrice (4), une disposition de courbure, avec une première partie incurvée (12, 13) définissant la courbure et avec une deuxième partie (8, 9, 10, 15, 17, 20, 21), distante de celle-ci, fixant et/ou écrasant ou séparant complètement le bord courbé de la structure en surface (2), est réalisée, **caractérisé en ce que**
le poinçon (5) comprend, dans la partie de sa joue latérale, qui est orientée vers le curseur de matrice (6), un élément mobile dans une direction parallèle au curseur de matrice (6) pour la fixation de la structure en surface.

2. Dispositif selon la revendication 1, **caractérisé en ce que**, dans la deuxième partie (8, 9, 10, 15, 17, 20, 21), au moins un des composants : curseur de matrice (6), poinçon (5) ou matrice (4), de préférence du curseur de matrice (6), présente un tranchant (10) qui s'étend, dans l'état fermé, sur une distance par rapport à un composant opposé à hauteur d'au moins 80 %, de préférence d'au moins 90 %, plus particulièrement de préférence d'au moins 95 % jusqu'à presque entrer en contact avec la surface opposée.

3. Dispositif selon la revendication 1 ou 2, **caractérisé en ce que** la matrice (4) et le curseur (6) forment ensemble, dans l'état fermé, la première partie (12, 13) définissant la courbure de la cavité (A) et le tranchant (10) est réalisé sur un bord (9) du curseur (6) orienté vers le poinçon (5), de préférence en saillie.

4. Dispositif selon l'une des revendications 1 à 3, **caractérisé en ce que** l'élément mobile dans une direction parallèle au curseur de matrice (6) est une avancée (8), dans lequel le curseur de matrice (6) et l'avancée (8) sont mobiles indépendamment l'un de l'autre.

5. Dispositif selon l'une des revendications 2 à 4, **caractérisé en ce que** la matrice (4) comprend au moins une ouverture d'aspiration (14) conduisant hors de la cavité (A), qui peut être raccordée à un dispositif d'aspiration d'air.

6. Dispositif selon l'une des revendications 2 à 5, **caractérisé en ce que** le poinçon (5) comprend au moins une alimentation en air comprimé (16) conduisant vers la cavité (A) et pouvant être raccordée à une source d'air comprimé.

7. Dispositif selon la revendication 5 ou 6, **caractérisé en ce que**, sur la joue latérale du poinçon (5), immédiatement après le point de contact avec le curseur de matrice (6) sur le côté extérieur de la cavité (A), est monté un joint d'étanchéité (17).

8. Dispositif selon l'une des revendications 2 à 7, **caractérisé en ce que** le poinçon (5) comprend, dans la partie, orientée vers le curseur de matrice (6), de sa joue latérale, un élément (19) mobile dans une direction parallèle à la matrice (4), qui présente une arête (20) dépassant dans la partie recourbée (12, 13) ou une disposition de doigts parallèles qui peuvent être déployer le cas échéant en direction de la partie incurvée (12, 13).

9. Dispositif selon l'une des revendications 2 à 8, **caractérisé en ce qu'**une disposition de chauffage (22) pour la structure de surface (2) est prévue, le cas échéant sur au moins un des composants : matrice (4), curseur de matrice (6) ou poinçon (5).

10. Procédé de fabrication d'une pièce moulée composite (1) avec une structure de surface (2) recouvrant au moins une partie de la pièce moulée composite, plus particulièrement une partie de la surface de la pièce moulée composite, plus particulièrement une structure de décoration, et une structure porteuse (3), comprenant les étapes suivantes :
a) mise à disposition d'un dispositif avec un dispositif selon les revendications précédentes avec au moins un poinçon (5), une matrice (4) et un curseur de matrice (6) dans une position ouverte ;
b1) insertion d'une structure de surface (2) non encore reliée dans le dispositif, de sorte que la structure de surface correspond à au moins une partie d'un contour de la pièce moulée composite (1) à obtenir ;
b2) en option, à l'aide d'une structure de surface (2) partiellement pré-formé avec une courbure ;
c1) mise du dispositif dans une position fermée et réalisation d'une cavité (A) définissant globalement la forme de la pièce moulée composite (1) à fabriquer à l'intérieur du dispositif ;
d) introduction d'une structure porteuse (3) non durcie dans la cavité ;
e) séparation d'une bande (11) dépassant du bord externe de la courbure de la structure de surface (2) sur le côté arrière de la pièce moulée composite (1) ;
f) durcissement puis
g) déformation de la pièce moulée composite (1) ; dans lequel les étapes d) à f) peuvent être exécutées dans un ordre différent et/ou en partie simultanément ;
**caractérisé en ce que**
pendant l'étape c1) de la mise du dispositif dans une position fermée et pendant la réalisation de la cavité (A) définissant globalement la forme de la pièce moulée composite (1) à fabriquer à l'intérieur du dispositif, le bord externe de la courbure (2a) est fixé entre deux composants déplacés parallèlement et est entraîné avec leur mouvement de fermeture, et **en ce que** avant et/ou pendant l'introduction de la structure porteuse non durcie (3) à l'étape d), la structure de surface (2) est fixée au niveau du bord externe de la courbure (2a).

11. Procédé selon la revendication 10, **caractérisé en ce que** avant ou pendant l'introduction de la structure porteuse non durcie à l'étape d) et, dans tous les cas, avant la séparation de la bande (11) dépassant du bord externe de la courbure (2a) de la structure de décoration de surface (2), la structure de surface (2) est entièrement recourbée sur le côté arrière de la pièce moulée composite (1) à l'étape e).

12. Procédé selon la revendication 10 ou 11, **caractérisé en ce que** la structure de surface (2), plus particulièrement la zone de bord avec la courbure (2a), est aspirée par l'application d'un vide sur ou dans la matrice (4) ou la zone incurvée (12, 13) entre la matrice (4) et le curseur de matrice (6).

13. Procédé selon l'une des revendications 10 à 12, **caractérisé en ce que** la structure de surface (2), plus particulièrement la zone de bord avec la courbure (2a), est comprimée par l'application d'une surpression sur ou dans la matrice (4) ou la zone incurvée entre la matrice (4) et le curseur de matrice (6).

14. Procédé selon la revendication 12 ou 13, **caractérisé en ce que** la distance entre les composants est étanchéifiée au moins pendant l'application du vide et/ou de la surpression.

15. Procédé selon l'une des revendications 10 à 14, **caractérisé en ce que** la structure de surface (2) est comprimée au moyen d'au moins un élément mécanique (20) vers la zone incurvée de la matrice (4) et/ou du curseur de matrice (6).

16. Procédé selon l'une des revendications 10 à 15, **caractérisé en ce que** la structure de surface (2) est chauffée avant et/ou au moins pendant le recourbement.
